# FASCICULE DE BREVET EUROPEEN

(11) **EP 3 129 266 B1**
(45) Date de publication et mention de la délivrance du brevet: **07.08.2019**
(21) Numéro de dépôt: 15717537.3
(22) Date de dépôt: 10.03.2015
(51) Int. Cl.: B60W 20/00, B60K 6/547

(54) **PROCÉDÉ DE COMMANDE D'UNE TRANSMISSION HYBRIDE POUR VÉHICULE AUTOMOBILE AVEC PRISE EN COMPTE DES INTERRUPTIONS DE TRANSITION ENTRE MODES CINÉMATIQUES**
VERFAHREN ZUR STEUERUNG EINES HYBRIDGETRIEBES FÜR EIN KRAFTFAHRZEUG UNTER BERÜCKSICHTIGUNG VON ÜBERGANGSUNTERBRECHUNGEN ZWISCHEN KINEMATISCHEN BETRIEBSARTEN
METHOD FOR CONTROLLING A HYBRID TRANSMISSION FOR A MOTOR VEHICLE TAKING INTO ACCOUNT TRANSITION INTERRUPTIONS BETWEEN KINEMATIC MODES

(30) Priorité: 11.04.2014 FR 1453265
(43) Date de publication de la demande: 15.02.2017
(73) Titulaire: Renault S.A.S., 92100 Boulogne-Billancourt (FR)
(72) Inventeur: VESPASIEN, Jean-Marie, F-94600 Choisy-le-Roi (FR); LALLERON, Vivien, F-91260 Juvisy sur Orge (FR)
(86) Numéro de dépôt international: PCT/FR2015/050590
(87) Numéro de publication internationale: WO 2015/155428

(56) Documents cités:
- EP-A2- 1 298 361
- WO-A1-2012/131259
- DE-A1-102009 045 507
- DE-A1-102013 202 552

## Description

L'invention a pour domaine technique la commande d'une transmission hybride à plusieurs modes pour véhicule automobile, et plus particulièrement, la commande d'une telle transmission lors d'interruptions de changement de mode.

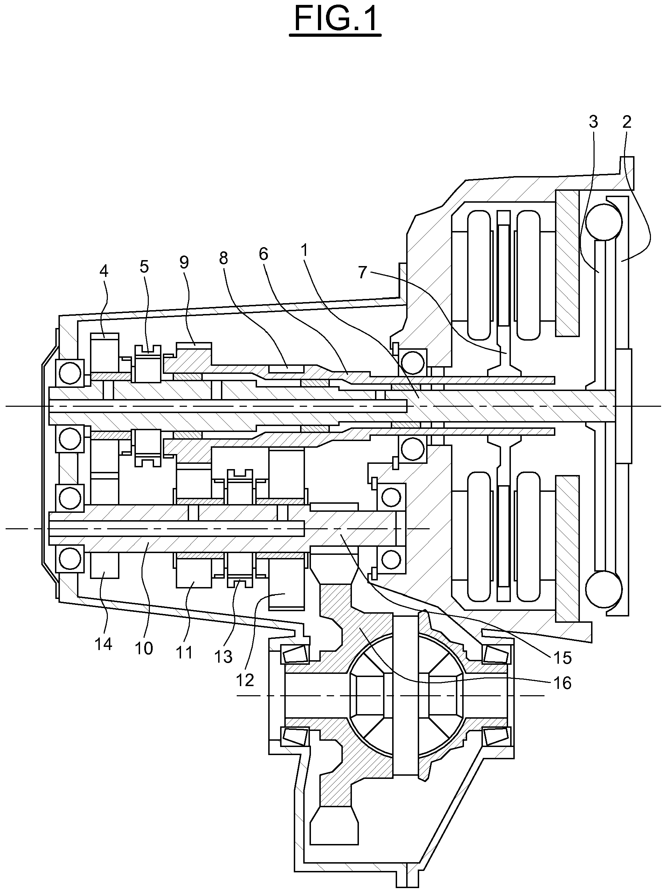

On peut voir sur la figure 1 une transmission hybride pour un véhicule automobile comprenant un arbre primaire 1 relié à un volant d'inertie 2, lui-même connecté à un moteur thermique 3.

Un second arbre primaire 6 concentrique avec le premier arbre primaire est relié à une machine électrique 7.

Les deux arbres primaires 1,6 sont munis d'un ensemble de pignons 4,8,9 afin de transférer l'énergie motrice à un arbre secondaire 10 muni lui aussi d'un ensemble de pignons 11,12,14, connecté aux roues motrices par l'intermédiaire d'un autre pignon 15 de descente et d'un différentiel 16.

Deux moyens de couplages 5,13 permettent différents modes cinématiques impliquant différentes connexions du moteur thermique 3, de la machine électrique 7 et des roues motrices.

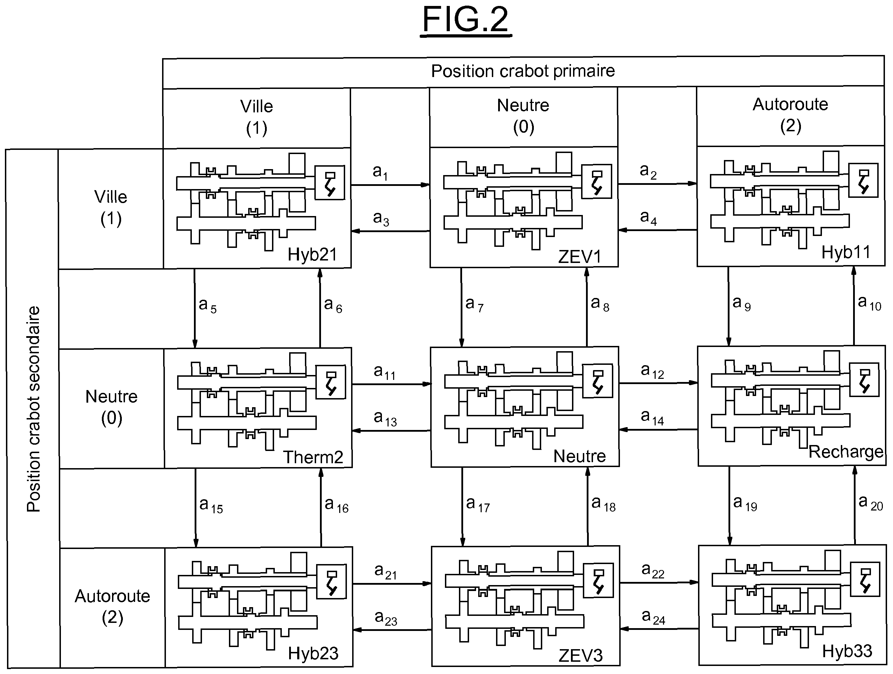

La figure 2 illustre les différents modes cinématiques disponibles en fonction des positions des crabots des systèmes de couplage.

Le premier moyen de couplage 5 entre les deux arbres primaires 1,6 peut occuper trois positions.

Dans une première position (position 0 du crabot primaire-neutre), le moteur thermique 3 est découplé de la chaîne cinématique reliant la machine électrique 7 aux roues motrices,
Dans une deuxième position (position 2 du crabot primaire-Route), le moteur thermique 3 entraîne les roues motrices indépendamment de la machine électrique 7,
Dans une troisième position (position 1 du crabot primaire - couplage), le moteur thermique 3 et la machine électrique 7 sont couplés de manière à additionner en direction des roues leurs couples respectifs.

Le deuxième moyen de couplage 13 reliant directement le second arbre primaire 6 lié à la machine électrique 7 et l'arbre secondaire 10 peut occuper également trois positions :
Dans une première position (position 0 du crabot secondaire - neutre), la machine électrique 7 n'est pas directement couplée à l'arbre secondaire 10.

Dans une deuxième position (position 1 du crabot secondaire - Ville), la machine électrique 7 est directement liée à l'arbre secondaire 10 avec un premier rapport.

Dans une troisième position (position 2 du crabot secondaire - autoroute), la machine électrique 7 est directement liée à l'arbre secondaire 10 avec un deuxième rapport.

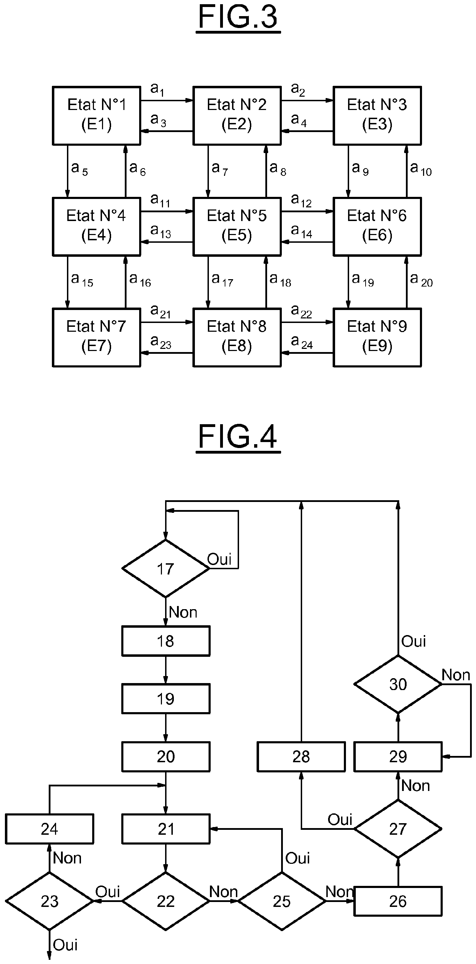

Les trois positions de chacun des moyens de couplage 5,13 (qui comprennent notamment des crabots) permettent d'obtenir neuf modes de fonctionnement nommés (à titre d'exemple) Hyb21, ZEV1, Hyb11, Therm2, Neutre, Recharge,Hyb23, ZEV3 et Hyb33. Il est possible de passer d'un mode à l'autre par un ensemble de transitions référencées a1 à a24 sur les figures 2 et 3.

L'un des avantages compétitifs du type de transmission présenté par la figure 1 est qu'elle ne comprend pas de synchroniseur mécanique. Ainsi, le passage d'un mode cinématique à l'autre requiert le pilotage électronique de la synchronisation des éléments à craboter.

Cela signifie que le passage d'un mode cinématique à un autre se fait obligatoirement par une transition, au cours de laquelle il s'agit de prendre la main sur les actionneurs de couples (moteur thermique 3 et machine électrique 7) et de piloter le déplacement du (des) crabot(s) concerné(s) par la transition.

En fonction de la situation qui se présente, la réalisation d'un changement de mode est plus ou moins chronophage. Pendant le temps de réalisation d'un changement de mode cinématique, la volonté du conducteur peut changer de façon telle qu'elle remette en cause la transition en cours.

Il existe un besoin pour un procédé de commande d'une transmission hybride apte à gérer une interruption de transition entre modes cinématiques.

De l'état de la technique antérieure, on connaît le document DE 10 2013 202552 A1 qui décrit un procédé de commande d'une transmission hybride pour véhicule automobile pouvant fonctionner selon au moins deux modes cinématiques impliquant différentes connexions d'au moins un moteur thermique, d'au moins une machine électrique et d'au moins deux roues motrices, et dans lequel :
on commande la transition entre modes cinématiques en fonction du mode cinématique courant lors du déclenchement de la transition et d'une consigne de mode cinématique,
si on détermine que le mode cinétique courant n'est pas égal au mode cinétique de l'étape de transition et que la consigne de mode cinétique n'est pas égale au mode cinétique final, on réalise une décision sur l'opportunité d'une interruption de transition, lors d'un changement de requête du conducteur au cours de laquelle on détermine si une interruption de l'action est en cours, puis
on poursuit la transition ou on entreprend une nouvelle transition selon le résultat de la détermination d'une interruption de l'action.

L'invention a pour objet un procédé de commande d'une transmission hybride pour véhicule automobile pouvant fonctionner selon au moins deux modes cinématiques impliquant différentes connexions d'au moins un moteur thermique, d'au moins une machine électrique et d'au moins deux roues motrices. Le procédé comprend les étapes suivantes :
on commande la transition entre modes cinématiques en fonction du mode cinématique courant lors du déclenchement de la transition et d'une consigne de mode cinématique,
si on détermine que le mode cinétique courant n'est pas égal au mode cinétique de l'étape de transition et que la consigne de mode cinétique n'est pas égale au mode cinétique final, on réalise une décision sur l'opportunité d'une interruption de transition, lors d'un changement de requête du conducteur au cours de laquelle on détermine si une interruption de l'action est en cours, puis
on poursuit la transition ou on entreprend une nouvelle transition selon le résultat de la détermination d'une interruption de l'action.

Pour commander la transition entre modes cinématiques en fonction du mode cinématique courant lors du déclenchement de la transition et d'une consigne de mode cinématique, on réalise les étapes suivantes :
on détermine si la consigne de mode cinématique correspond au mode cinématique courant,
si tel n'est pas le cas, on mémorise le mode cinématique courant dans une valeur de mode cinématique initial et la consigne de mode cinématique dans une valeur de mode cinématique final, puis
on détermine la trajectoire pour passer du mode cinématique initial au mode cinématique final, puis
on initialise le compteur d'étapes de transition à 1, puis
on commande la transition de mode vers le mode cinématique de l'étape de transition, puis
on détermine si le mode cinématique courant est égal au mode cinématique de l'étape de transition,
si tel est le cas, on détermine si le mode cinématique courant est égal au mode cinématique final,
si tel est le cas, le procédé se termine,
si le mode cinématique courant n'est pas égal au mode cinématique final, on incrémente le compteur d'étapes de transition puis le procédé se poursuit à l'étape de commande de transition de mode vers le mode cinématique de l'étape de transition,
si on détermine que le mode cinématique courant n'est pas égal au mode cinématique de l'étape de transition, on détermine si la consigne de mode cinématique est égale au mode cinématique final,
si tel est le cas, le procédé se poursuit à l'étape de commande de la transition de mode vers le mode cinématique de l'étape de transition.

Pour réaliser une décision sur l'opportunité d'une interruption de transition, lors d'un changement de requête du conducteur, on peut réaliser les étapes suivantes :
si on détermine que le mode cinématique courant n'est pas égal au mode cinématique de l'étape de transition et que la consigne de mode cinématique n'est pas égale au mode cinématique final, on réalise la sollicitation du décisionnel d'interruption puis, on détermine si une interruption de l'action est préférable.

Pour poursuivre la transition ou entreprendre une nouvelle transition selon le résultat de la décision, on peut réaliser les étapes suivantes :
si on a déterminé qu'il y a une interruption de l'action en cours, on commande l'arrêt de l'action en cours au niveau de la transmission puis le procédé reprend à l'étape au cours de laquelle on détermine si la consigne de mode cinématique correspond au mode cinématique courant,
si on a déterminé qu'il est préférable de ne pas interrompre l'action en cours, on poursuit la transition vers le mode cinématique de l'étape de transition, puis
on détermine si le mode cinématique courant est égal au mode cinématique de l'étape de transition,
si tel n'est pas le cas, le procédé se poursuit à l'étape de poursuite de la transition vers le mode cinématique de l'étape de transition,
si tel est le cas, le procédé se poursuit à l'étape au cours de laquelle on détermine si la consigne de mode cinématique correspond au mode cinématique courant.

Les changements de mode cinématique peuvent être supervisés pour s'effectuer selon des trajectoires de passage prédéfinies.

La supervision des changements de mode cinématique peut permettre une interruption de l'action en cours pour une meilleure prise en compte de la volonté conducteur.

Le mécanisme décisionnel peut être basé sur une comparaison du coût des trajectoires.

D'autres buts, caractéristiques et avantages de l'invention apparaîtront à la lecture de la description suivante, donnée uniquement à titre d'exemple non limitatif et faite en référence aux dessins annexés sur lesquels ;
- la figure 1 illustre une transmission hybride pour véhicule automobile,
- la figure 2 illustre les différents modes cinématiques de la transmission, disponibles en fonction des positions des crabots des systèmes de couplage,
- la figure 3 est un tableau de transitions simplifié issu de la figure 2,
- la figure 4 illustre les principales étapes d'un procédé de commande de la transmission permettant le changement de mode cinématique en tenant compte des interruptions, et
- la figure 5 illustre un procédé de supervision des transitions des modes cinématiques comprenant des interruptions de transition.

Sur les figures 2 et 3, on a représenté les neuf états E₁ à E₉ de la transmission de la figure 1, et les 24 transitions ai à a₂₄ possibles entre ces états. Plusieurs chemins sont possibles pour passer d'un état à un autre. Par exemple, pour aller de l'état E₁ à l'état E₇, on peut réaliser les chaînes E₁, a₅, E₄, a₁₅, E₇ ou E₁, a₅, E₄, a₁₁, E₅, a₁₁, E₈, a₂₃, E₇, etc.

Pour permettre la décision, il convient d'introduire un coût (ou une pondération) relatif à chaque transition afin de pouvoir déterminer comment satisfaire le critère de décision choisi.

On pose cᵢ le coût associé à la transition ai.

Le coût total d'une trajectoire est alors la somme des coûts associés aux transitions parcourues dans le cadre de cette trajectoire. En reprenant le deuxième exemple de transition décrit ci-dessus, on obtient le coût suivant :
- Coût (E₁, a₅, E₄, a₁₁, E₅, a₁₇, E₈, a₂₃, E₇) = c₅ + c₁₁ + c₁₇ + c₂₃

L'opportunité d'une interruption de transition peut ainsi être déterminée en comparant le coût de deux trajectoires :
- celle que l'on suivrait, conformément aux tables de programmation, pour rejoindre la nouvelle destination, en revenant au mode cinématique initial (i.e. en renonçant à la transition en cours), et
- celle que l'on suivrait, conformément aux tables de programmation, pour rejoindre la nouvelle destination, depuis l'ancienne destination (i.e. on achève la transition en cours avant de répondre à la nouvelle destination).

La figure 4 illustre un procédé de commande de la transmission permettant de passer d'un mode cinématique courant à une consigne de mode cinématique. Ce procédé intègre la prise en compte d'une interruption de transition sous la forme d'un changement de consigne de mode cinématique, en cours de transition.

Le procédé comprend trois grands ensembles d'étapes permettant de commander la transition entre modes cinématiques, de réaliser une décision sur l'opportunité d'une interruption de transition, lors d'un changement de requête du conducteur, puis poursuivre la transition ou entreprendre une nouvelle transition selon le résultat de la décision.

Les étapes 17 à 25 permettent de commander la transition entre modes cinématiques.

Les étapes 26 et 27 permettent de réaliser une décision sur l'opportunité d'une interruption de transition, lors d'un changement de requête du conducteur.

Les étapes 28 à 30 permettent de poursuivre la transition ou d'entreprendre une nouvelle transition selon le résultat de la décision.

Au cours d'une première étape 17, on détermine si la consigne de mode cinématique correspond au mode cinématique courant. Si tel est le cas, le procédé se termine.

Si tel n'est pas le cas, le procédé se poursuit au cours d'une deuxième étape 18, au cours de laquelle on mémorise le mode cinématique courant dans une valeur de mode cinématique initial et la consigne de mode cinématique dans une valeur de mode cinématique final.

Au cours d'une étape 19, on détermine la trajectoire (définie par exemple par une succession de sommets Eᵢ=kin_mod(i)) pour passer du mode cinématique initial au mode cinématique final.

Au cours d'une étape 20, on initialise le compteur d'étapes de transition à 1.

Le procédé se poursuit par une étape 21 au cours de laquelle on commande la transition de mode vers le mode cinématique de l'étape de transition kin_mod(i)

A une étape 22, on détermine si le mode cinématique courant est égal au mode cinématique de l'étape intermédiaire de transition.

Si tel est le cas, le procédé se poursuit à une étape 23, au cours de laquelle on détermine si le mode cinématique courant est égal au mode cinématique final. Si tel est le cas, le procédé se termine. Si tel n'est pas le cas, on incrémente le compteur d'étapes de transition à l'étape 24 avant que le procédé se poursuive à l'étape 21.

Si on détermine à l'étape 22, que le mode cinématique courant n'est pas égal au mode cinématique de l'étape de transition kin_mod(i), le procédé se poursuit à l'étape 25 au cours de laquelle on détermine si la consigne de mode cinématique est égale au mode cinématique final.

Si tel est le cas, le procédé se poursuit à l'étape 21. Si tel n'est pas le cas, le procédé se poursuit à l'étape 26, au cours de laquelle on réalise la sollicitation du décisionnel d'interruption décrit plus haut puis à l'étape 27, on détermine si une interruption de l'action est préférable.

Les conditions pour décréter qu'une interruption de l'action est préférable sont les suivantes :
- Aucune action irrémédiable n'est amorcée (ex. : le système crabot n'est pas encore en mouvement), et
- L'analyse de coût favorise l'interruption par rapport à la poursuite de l'action en cours.

Si à l'étape 27, on a déterminé qu'il y a une interruption de l'action en cours, le procédé se poursuit à l'étape 28, au cours de laquelle on commande l'arrêt de l'action en cours au niveau de la transmission suivie d'une reprise du procédé à l'étape 17.

Si à l'étape 27, on a déterminé qu'il n'y a pas d'interruption de l'action en cours, le procédé se poursuit à l'étape 29 au cours de laquelle on poursuit la transition vers le mode cinématique de l'étape intermédiaire de transition

Le procédé se poursuit alors à l'étape 30 au cours de laquelle on détermine si le mode cinématique courant est égal au mode cinématique de l'étape intermédiaire de transition ciblé. Si tel n'est pas le cas, le procédé se poursuit à l'étape 29. Si tel est le cas, le procédé se poursuit à l'étape 17.

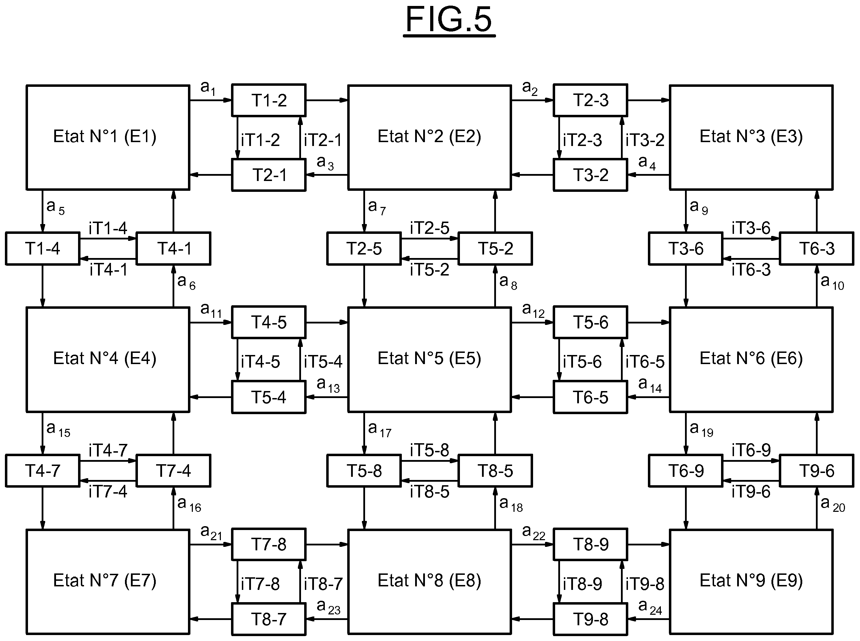

La figure 5 illustre la méthode de supervision incluant une gestion des interruptions de transition.

Par rapport à la figure 3, on a rajouté aux états stables (i.e. modes cinématiques établis) E₁ à E₉, et aux transitions ai à a24, les éléments suivants :
- Tᵢ₋ⱼ : l'état permettant le pilotage de la transition de l'état Eᵢ vers l'état Eⱼ
- iTᵢ₋ⱼ : le flag permettant d'interrompre la transition Ti-j pour permettre un retour à l'état Eᵢ via la transition Tⱼ₋ᵢ.

Dans la méthode illustrée par la figure 5, le mécanisme décisionnel permet d'évaluer les flags iTi-j. C'est ainsi que si la décision d'interrompre la transition en cours est prise (i.e. iTi-j = 1), on passe alors aussitôt de la transition Ti-j (qui était amorcée) à la transition Tj-i qui permet de revenir à l'état Ei. Les changements de mode cinématique sont ainsi supervisés pour s'effectuer selon des trajectoires de passage prédéfinies. Cette supervision permet une interruption de l'action en cours pour une meilleure prise en compte de la volonté conducteur. Enfin, comme indiqué plus haut, le mécanisme décisionnel est basé sur une comparaison du coût des trajectoires.

## Revendications

1. Procédé de commande d'une transmission hybride pour véhicule automobile pouvant fonctionner selon au moins deux modes cinématiques (E1,E2,E3,E4,E5,E6,E7,E8,E9) impliquant différentes connexions d'au moins un moteur thermique (3), d'au moins une machine électrique (7) et d'au moins deux roues motrices, dans lequel
on commande la transition entre modes cinématiques en fonction du mode cinématique courant lors du déclenchement de la transition et d'une consigne de mode cinématique,
si on détermine que la consigne de mode cinématique a changé au cours d'une transition, on réalise une décision sur l'opportunité d'une interruption de transition,
puis, on poursuit la transition ou on entreprend une nouvelle transition selon le résultat de la détermination d'une interruption de l'action,
le procédé de commande étant **caractérisé par le fait qu'**il comprend les étapes suivantes :
pour commander la transition entre modes cinématiques en fonction du mode cinématique courant lors du déclenchement de la transition et d'une consigne de mode cinématique, on réalise les étapes suivantes :
on détermine si la consigne de mode cinématique correspond au mode cinématique courant,
si tel n'est pas le cas, on mémorise le mode cinématique courant dans une valeur de mode cinématique initial et la consigne de mode cinématique dans une valeur de mode cinématique final, puis
on détermine la trajectoire pour passer du mode cinématique initial au mode cinématique final, puis
on initialise le compteur d'étapes de transition à 1, puis
on commande la transition de mode vers le mode cinématique de l'étape de transition, puis
on détermine si le mode cinématique courant est égal au mode cinématique de l'étape de transition,
si tel est le cas, on détermine si le mode cinématique courant est égal au mode cinématique final,
si tel est le cas, le procédé se termine,
si le mode cinématique courant n'est pas égal au mode cinématique final, on incrémente le compteur d'étapes de transition puis le procédé se poursuit à l'étape de commande de transition de mode vers le mode cinématique de l'étape de transition,
si on détermine que le mode cinématique courant n'est pas égal au mode cinématique de l'étape de transition, on détermine si la consigne de mode cinématique est égale au mode cinématique final,
si tel est le cas, le procédé se poursuit à l'étape de commande de la transition de mode vers le mode cinématique de l'étape de transition.

2. Procédé de commande selon la revendication 1, dans lequel, pour réaliser une décision sur l'opportunité d'une interruption de transition, lors d'un changement de requête du conducteur, on réalise les étapes suivantes :
si on détermine que le mode cinématique courant n'est pas égal au mode cinématique de l'étape de transition et que la consigne de mode cinématique n'est pas égale au mode cinématique final, on réalise la sollicitation du décisionnel d'interruption puis, on détermine si une interruption de l'action est préférable.

3. Procédé de commande selon l'une quelconque des revendications précédentes, dans lequel, pour poursuivre la transition ou entreprendre une nouvelle transition selon le résultat de la décision, on réalise les étapes suivantes :
si on a déterminé qu'il y a une interruption de l'action en cours, on commande l'arrêt de l'action en cours au niveau de la transmission puis le procédé reprend à l'étape au cours de laquelle on détermine si la consigne de mode cinématique correspond au mode cinématique courant,
si on a déterminé qu'il est préférable de ne pas interrompre l'action en cours, on poursuit la transition vers le mode cinématique de l'étape de transition, puis
on détermine si le mode cinématique courant est égal au mode cinématique de l'étape de transition,
si tel n'est pas le cas, le procédé se poursuit à l'étape de poursuite de la transition vers le mode cinématique de l'étape de transition,
si tel est le cas, le procédé se poursuit à l'étape au cours de laquelle on détermine si la consigne de mode cinématique correspond au mode cinématique courant.

4. Procédé de commande selon l'une des revendications précédentes, **caractérisé en ce que** les changements de mode cinématique sont supervisés pour s'effectuer selon des trajectoires de passage prédéfinies.

5. Procédé de commande selon la revendication 4, **caractérisé en ce que** la supervision des changements de mode cinématique permet une interruption de l'action en cours pour une meilleure prise en compte de la volonté conducteur.

6. Procédé de commande selon la revendication 5, **caractérisé en ce que** le mécanisme décisionnel est basé sur une comparaison du coût des trajectoires.

## Patentansprüche

1. Verfahren zur Steuerung eines Hybridgetriebes für ein Kraftfahrzeug, das nach mindestens zwei kinematischen Betriebsarten (E1, E2, E3, E4, E5, E6, E7, E8, E9) arbeiten kann, beinhaltend verschiedene Verbindungen von mindestens einem Verbrennungsmotor (3), von mindestens einer elektrischen Maschine (7) und von mindestens zwei Antriebsrädern, bei dem
man den Übergang zwischen kinematischen Betriebsarten in Abhängigkeit von der beim Auslösen des Übergangs aktuellen kinematischen Betriebsart und einer kinematischen Sollbetriebsart steuert,
wenn man bestimmt, dass sich die kinematische Sollbetriebsart während eines Übergangs geändert hat, man eine Entscheidung über die Zweckmäßigkeit einer Übergangsunterbrechung ausführt,
man dann je nach dem Ergebnis der Bestimmung einer Unterbrechung des Vorgangs den Übergang fortsetzt oder einen neuen Übergang vornimmt,
wobei das Steuerungsverfahren **dadurch gekennzeichnet ist, dass** es die folgenden Schritte umfasst:
zum Steuern des Übergangs zwischen kinematischen Betriebsarten in Abhängigkeit von der beim Auslösen des Übergangs aktuellen kinematischen Betriebsart und von einer kinematischen Sollbetriebsart werden die folgenden Schritte ausgeführt:
man bestimmt, ob die kinematische Sollbetriebsart der aktuellen kinematischen Betriebsart entspricht,
falls dies nicht der Fall ist, speichert man die aktuelle kinematische Betriebsart in einem Wert für die kinematische Ausgangsbetriebsart und die kinematische Sollbetriebsart in einem Wert für die kinematische Zielbetriebsart, dann
bestimmt man den Weg, um von der kinematischen Ausgangsbetriebsart zur kinematischen Zielbetriebsart zu wechseln, dann
initialisiert man den Übergangsschrittezähler auf 1, dann
steuert man den Übergang der Betriebsart zur kinematischen Betriebsart des Übergangsschritts, dann bestimmt man, ob die aktuelle kinematische Betriebsart gleich der kinematischen Betriebsart des Übergangsschritts ist,
falls dies der Fall ist, bestimmt man, ob die aktuelle kinematische Betriebsart gleich der kinematischen Zielbetriebsart ist,
falls dies der Fall ist, endet das Verfahren,
falls die aktuelle kinematische Betriebsart nicht gleich der kinematischen Zielbetriebsart ist, inkrementiert man den Übergangsschrittezähler, woraufhin das Verfahren beim Schritt des Steuerns des Übergangs der Betriebsart zur kinematischen Betriebsart des Übergangsschritts fortgesetzt wird,
wenn man bestimmt, dass die aktuelle kinematische Betriebsart nicht gleich der kinematischen Betriebsart des Übergangsschritts ist, bestimmt man, ob die kinematische Sollbetriebsart gleich der kinematischen Zielbetriebsart ist,
falls dies der Fall ist, wird das Verfahren beim Schritt des Steuerns des Übergangs der Betriebsart zur kinematischen Betriebsart des Übergangsschritts fortgesetzt.

2. Steuerungsverfahren nach Anspruch 1, bei dem zum Ausführen einer Entscheidung über die Zweckmäßigkeit einer Übergangsunterbrechung bei einer Änderung der Anforderung des Fahrers die folgenden Schritte ausgeführt werden:
wenn man bestimmt, dass die aktuelle kinematische Betriebsart nicht gleich der kinematischen Betriebsart des Übergangsschritts ist und die kinematische Sollbetriebsart nicht gleich der kinematischen Zielbetriebsart ist, führt man die Anforderung der Unterbrechungsentscheidungsregeln aus und bestimmt dann, ob eine Unterbrechung des Vorgangs vorzuziehen ist.

3. Steuerungsverfahren nach einem der vorhergehenden Ansprüche, bei dem man zum Fortsetzen des Übergangs oder Vornehmen eines neuen Übergangs je nach dem Ergebnis der Entscheidung die folgenden Schritte ausführt:
wenn man bestimmt hat, dass eine Unterbrechung des aktuellen Vorgangs vorliegt, steuert man das Stoppen des aktuellen Vorgangs am Getriebe, woraufhin das Verfahren beim dem Schritt weitermacht, während dessen man bestimmt, ob die kinematische Sollbetriebsart der aktuellen kinematischen Betriebsart entspricht,
wenn man bestimmt hat, dass es vorzuziehen ist, den aktuellen Vorgang nicht zu unterbrechen, setzt man den Übergang zur kinematischen Betriebsart des Übergangsschritts fort, dann
bestimmt man, ob die aktuelle kinematische Betriebsart gleich der kinematischen Betriebsart des Übergangsschritts ist,
falls dies nicht der Fall ist, wird das Verfahren beim Schritt des Fortsetzens des Übergangs zur kinematischen Betriebsart des Übergangsschritts fortgesetzt,
falls dies der Fall ist, wird das Verfahren bei dem Schritt fortgesetzt, während dessen man bestimmt, ob die kinematische Sollbetriebsart der aktuellen kinematischen Betriebsart entspricht.

4. Steuerungsverfahren nach einem der vorhergehenden Ansprüche, **dadurch gekennzeichnet, dass** die Änderungen der kinematischen Betriebsart überwacht werden, um nach vorgegebenen Schaltwegen ausgeführt zu werden.

5. Steuerungsverfahren nach Anspruch 4, **dadurch gekennzeichnet, dass** die Überwachung der Änderungen der kinematischen Betriebsart eine Unterbrechung des aktuellen Vorgangs zwecks einer besseren Berücksichtigung des Fahrerwunsches ermöglicht.

6. Steuerungsverfahren nach Anspruch 5, **dadurch gekennzeichnet, dass** der Entscheidungsmechanismus auf einem Vergleich der Wegekosten beruht.

## Claims

1. Method for controlling a hybrid transmission for a motor vehicle operable in at least two kinematic modes (E1, E2, E3, E4, E5, E6, E7, E8, E9) involving different connections of at least one internal combustion engine (3), of at least one electric machine (7) and at least two drive wheels, in which:
the transition between kinematic modes is controlled according to the current kinematic mode at the onset of the transition and a kinematic mode setpoint,
if it is determined that the kinematic mode setpoint has changed during a transition, a decision is made on whether a transition interruption is possible,
then, the transition is continued or a new transition is carried out according to the result of the determination of an interruption of the action,
the method being **characterized in that** it comprises the following steps:
to control the transition between kinematic modes according to the current kinematic mode at the onset of the transition and a kinematic mode setpoint, the following steps are performed:
it is determined if the kinematic mode setpoint corresponds to the current kinematic mode,
if this is not the case, the current kinematic mode is stored in an initial kinematic mode value and the kinematic mode setpoint in a final kinematic mode value, then
the trajectory to pass from the initial kinematic mode to the final kinematic mode is determined, then
the transition step counter is initialized to 1, then
the mode transition is commanded to the kinematic mode of the transition step, then
it is determined if the current kinematic mode is equal to the kinematic mode of the transition step,
if this is the case, it is determined if the current kinematic mode is equal to the final kinematic mode,
if this is the case, the method is terminated,
if the current kinematic mode is not equal to the final kinematic mode, the transition step counter is incremented, then the transition method continues to the mode transition control step to the kinematic mode of the transition step,
if it is determined that the current kinematic mode is not equal to the kinematic mode of the transition step, it is determined if the kinematic mode setpoint is equal to the final kinematic mode,
if this is the case, the method continues in the control step from the mode transition to the kinematic mode of the transition step.

2. Control method according to Claim 1, in which, in order to make a decision on whether a transition interruption is possible, during a change of request of the driver, the following steps are performed:
if it is determined that the current kinematic mode is not equal to the kinematic mode of the transition step and that the kinematic mode setpoint is not equal to the final kinematic mode, the stress relating to the interruption decision is performed, then it is determined if an interruption of the action is preferable.

3. Control method according to either one of the preceding claims, in which, in order to continue the transition or start a new transition according to the outcome of the decision, the following steps are performed:
if it was determined that an action is in the process of being interrupted, the action in progress is stopped at the transmission level then the method continues at the step during which it is determined that the kinematic mode setpoint corresponds to the current kinematic mode,
if it was determined that it is preferable not to interrupt the current action, the transition continues toward the kinematic mode of the transition step, then
it is determined if the current kinematic mode is equal to the kinematic mode of the transition step,
if this is not the case, the method continues to the transition continuation step toward the kinematic mode of the transition step,
if this is the case, the method continues to the step during which it is determined if the kinematic mode setpoint corresponds to the current kinematic mode.

4. Control method according to one of the preceding claims, **characterized in that** the kinematic mode changes are monitored to take place according to predefined shift trajectories.

5. Control method according to Claim 4, **characterized in that** monitoring of the kinematic mode changes allows the action in progress to be interrupted so that the driver's intentions can be better taken into account.

6. Control method according to Claim 5, **characterized in that** the decision-making mechanism is based on a comparison of the cost of the trajectories.
